# EUROPÄISCHE PATENTANMELDUNG

(11) **EP 4 837 775 A1**
(43) Veröffentlichungstag der Anmeldung: **11.11.2026**
(21) Anmeldenummer: 25195092.9
(22) Anmeldetag: 11.08.2025
(51) Int. Cl.: B60L 53/30, B60L 53/31, B60L 53/35

(54) **LADESYSTEM**

(30) Priorität: 07.05.2025 AT 601042025
(71) Anmelder: Aydemir, Ilker, 2340 Mödling Niederösterreich (AT)
(72) Erfinder: Aydemir, Ilker, 2340 Mödling Niederösterreich (AT)
(74) Vertreter: Haas, Stephan

(57) **Zusammenfassung**

Bei einem Ladesystem, umfassend zumindest eine Ladestation (1) sowie eine Befestigungsvorrichtung (2), die mit der zumindest einen Ladestation (1) verbunden ist, wobei die Ladestation (1) mithilfe eines Stromkabels (8) mit einer Stromquelle verbindbar ist, ist vorgesehen, dass die zumindest eine Ladestation (1) relativ zur Befestigungsvorrichtung (2) wahlweise bewegbar angeordnet ist.

## Beschreibung

Die Erfindung betrifft ein Ladesystem, umfassend zumindest eine Ladestation sowie eine Befestigungsvorrichtung, die mit der zumindest einen Ladestation verbunden ist, wobei die Ladestation mithilfe eines Stromkabels mit einer Stromquelle verbindbar ist.

Aus dem Stand der Technik sind verschiedene Möglichkeiten zum Laden von Elektrofahrzeugen, insbesondere Elektroautos bekannt. Hierbei sind Ladestationen ("Wallbox") mithilfe einer Befestigungsvorrichtung fest an einer Wand oder einer Säule montiert und stellen eine Energiequelle für den Anschluss an die Batterie eines Fahrzeuges bereit. Über die Ladestation wird die Batterie des Fahrzeuges im verbundenen Zustand durch das Stromnetz gespeist, wobei die Ladestation ihrerseits mit einem Stromkabel mit einer Stromquelle, bspw. über eine Steckdose mit dem Stromnetz, verbunden ist. Zusätzlich kommuniziert die Ladestation im verbundenen Zustand mit dem angeschlossenen Fahrzeug, um die Aufladung der Fahrzeugbatterie schnell und effizient durchführen zu können. Ladestationen weisen darüber hinaus oftmals weitere Funktionen auf, wie bspw. Schnittstellen zu weiteren Geräten oder zu Zahlungssystemen.

Nachteilig bei bekannten Ladestationen ist die feste Montage an einer Wand oder einer Säule. Hierdurch wird ein bestimmter Parkplatz einer bestimmten Ladestation zugeordnet. Falls dieser Parkplatz blockiert ist, bspw. durch ein Fahrzeug, das nicht lädt, ein Fahrzeug, das bereits vollgeladen ist oder ein anderes Hindernis, kann die diesem Parkplatz zugeordnete Ladestation nicht durch ein anderes Fahrzeug, welches bspw. auf einem Nebenparkplatz steht, genutzt werden.

Es ist daher eine Aufgabe der Erfindung, ein Ladesystem bereitzustellen, das eine größere Flexibilität beim Laden von Elektrofahrzeugen mithilfe einer Ladestation bereitstellt.

Erfindungsgemäß ist ein Ladesystem der eingangs genannten Art vorgesehen, bei welchem die zumindest eine Ladestation relativ zur Befestigungsvorrichtung wahlweise bewegbar angeordnet ist. Die Befestigungsvorrichtung ist, bevorzugt fest, mit einer Wand oder Säule verbunden bzw. verbindbar. Durch das Vorsehen einer möglichen Bewegung zwischen der Ladestation und der Befestigungsvorrichtung ist es möglich, die Ladestation relativ zur Befestigungsvorrichtung und damit relativ zur Wand bzw. Säule zu bewegen, sodass die Ladestation zwischen zumindest zwei Positionen bewegbar ist. Beispielsweise kann das Ladesystem derart ausgebildet sein, dass die Ladestation zwischen einer ersten Position, die einem ersten Parkplatz zugeordnet ist und einer zweiten Position, die einem zweiten Parkplatz zugeordnet ist, bewegt werden kann. Dies ermöglicht es, die Ladestation je nach Bedarf zu verschieben, sodass bspw. die Ladestation, wenn der erste Parkplatz belegt ist, von der ersten Position zur zweiten Position verschoben werden kann, wodurch ein auf dem zweiten Parkplatz befindliches Fahrzeug mithilfe der Ladestation geladen werden kann. Hierdurch wird die Flexibilität des Ladesystems deutlich erhöht.

Bevorzugt ist vorgesehen, dass die Ladestation relativ zur Befestigungsvorrichtung translatorisch verschiebbar angeordnet ist. Dies erlaubt insbesondere eine einfache Verlagerung der Ladestation zwischen zwei oder mehr Positionen, die bspw. jeweils einem Parkplatz zugeordnet sind. Besonders bevorzugt ist das Ladesystem derart angeordnet, dass die translatorische Bewegung im Wesentlichen entlang einer waagrechten Geraden erfolgt. Alternativ oder zusätzlich kann die Ladestation relativ zur Befestigungsvorrichtung auch verschwenkbar angeordnet sein. Dies erlaubt es bspw., dass die Ladestation immer im Wesentlichen gleich weit von einem Drehpunkt bzw. einer Drehachse angeordnet ist, unabhängig von der Position. Falls das Stromkabel, mit dem die Ladestation mit der Stromquelle verbunden ist, ebenfalls durch den Drehpunkt verläuft, ist es in jeder Position der Ladestation im Wesentlichen gleich gespannt, sodass ein Durchhängen des Stromkabels in manchen Positionen der Ladestation vermieden wird. Auch Mischformen, wie die Bewegung entlang einer gekrümmten Linie oder eine Bewegung, die in einem Abschnitt translatorisch verläuft und in einem anderen Abschnitt drehend, sind denkbar.

Die Ladestation bzw. die Befestigungsvorrichtung kann im Betrieb bspw. an einem senkrechten Element wie einer Wand oder einer Säule, einem schrägen Element oder einem waagrechten Element wie einer Decke befestigt sein.

Weiters ist bevorzugt vorgesehen, dass die zumindest eine Ladestation relativ zur Befestigungsvorrichtung wahlweise mithilfe eines Verriegelungselements fixiert werden kann. Dies erlaubt es, die Ladestation je nach Bedarf relativ zur Befestigungsvorrichtung anzuordnen, sodass eine ungewollte Bewegung der Ladestation, insbesondere während des Ladevorganges, verhindert wird.

Bevorzugt umfasst das Ladesystem eine einzige Ladestation.

Alternativ können auch zwei oder mehr Ladestationen mit einer gemeinsamen Befestigungsvorrichtung verbunden sein. Hierbei ist insbesondere darauf zu achten, dass die einzelnen Ladestationen einander im Betrieb nicht behindern bzw. miteinander kollidieren können.

Weiters ist bevorzugt vorgesehen, dass die Befestigungsvorrichtung zumindest eine Schiene umfasst. Schienen ermöglichen eine einfache und bewährte Führung einer Bewegung. Bevorzugt sind zumindest zwei im Wesentlichen parallele Schienen vorgesehen, die mit der Ladestation verbunden sind, wobei die Ladestation entlang der Schienen bewegbar ausgebildet ist. Besonders bevorzugt weist die Befestigungsvorrichtung zwei im Wesentlichen waagrechte und zueinander parallele Schienen für die Führung der Ladestation auf. Die waagrechten Schienen sind weiters bevorzugt mithilfe von weiteren, bspw. im Wesentlichen senkrecht verlaufenden Schienen, an einem festen Gegenstand wie einer Wand befestigt bzw. befestigbar. Die Schienen könnten miteinander bzw. mit einer Wand oder einer Decke bspw. mithilfe von Winkelverbindern verbunden bzw. verbindbar sein. Dies ermöglicht eine einfache, schnelle und dennoch sichere Montage. Die Befestigungsvorrichtung, insbesondere die Schienen, weisen bevorzugt Nuten auf, die der Befestigung an einem festen Gegenstand, der Befestigung an einer anderen Schiene und/oder der Befestigung der Ladestation dienen. Die Schienen können bspw. als Strebenprofile ausgebildet sein. Die Ladestation weist bevorzugt ein oder mehrere Führungselemente auf, die mit der Befestigungsvorrichtung, insbesondere einer oder mehreren Schienen, zusammenwirken, um die Relativbewegung zu ermöglichen. Die Führungselemente können bspw. ein oder mehrere Räder umfassen, die derart angeordnet sind, dass sie an der Befestigungsvorrichtung, insbesondere den Schienen, entlang laufen, wenn die Ladestation relativ zur Befestigungsvorrichtung bewegt wird. Bevorzugt sind die Räder in Nuten der Befestigungsvorrichtung, insbesondere der Schienen, geführt. Weiters sind die Räder bevorzugt beidseitig der Schienen angeordnet, wobei bspw. ein Rad in einer Nut an der Oberseite der Befestigungsvorrichtung und ein Rad in einer Nut an der Unterseite der Befestigungsvorrichtung angeordnet ist. Hierdurch wird die Ladestation einerseits durch die Räder gestützt und andererseits eine reibungsarme Bewegung zwischen der Ladestation und der Befestigungsvorrichtung (in lediglich einer Bewegungsbahn) erzielt. Alternativ oder zusätzlich können die Führungselemente auch bspw. Magnete oder Zahnräder bzw. Zahnstangen umfassen, die mit entsprechenden Gegenstücken, bspw. Magnete, Zahnräder bzw. Zahnstangen, der Ladestation zusammenwirken.

Da sich die Ladestation relativ zur Befestigungsvorrichtung bewegen lässt, variiert, falls das Stromkabel an einem Ende, bspw. an einer Wand, fest montiert ist, in der Regel auch der Abstand zwischen der Ladestation, also dem einen Ende des Stromkabels, und dem anderen Ende des Stromkabels, das fest montiert ist. Das Stromkabel muss so lange ausgebildet sein, dass es in jeder möglichen Position der Ladestation fest mit der Ladestation verbunden bleibt und idealerweise nicht (zu) gespannt ist. Dies hat zur Folge, dass das Stromkabel in zumindest einer Position der Ladestation durchhängt. Um eine gute Führung des Stromkabels in allen möglichen Positionen der Ladestation zu erlauben, ist bevorzugt vorgesehen, dass das Stromkabel zumindest abschnittsweise in einer Schleppkette (Energiekette) angeordnet ist. Bevorzugt weist die Schleppkette einen Speicher auf, bspw. eine Rolle, in der die Schleppkette, bzw. der aktuell nicht benötigte Teil der Schleppkette, gespeichert, also bspw. aufgerollt ist. Durch die Schleppkette wird das Stromkabel einerseits in einem vordefinierten Raum gehalten und hängt nicht lose in der Luft. Weiters wird das Stromkabel durch die Glieder der Schleppkette geschützt, sodass die Gefahr einer Beschädigung des Stromkabels reduziert wird. Die Schleppkette bzw. Energiekette kann bspw. aus einem Kunststoff oder einem Metall bestehen und offen oder geschlossen ausgebildet sein. Das Stromkabel ist weiters bevorzugt zumindest abschnittsweise auf einem Stützelement, bspw. einer Stützschiene angeordnet, die bevorzugt im Wesentlichen parallel zu waagrechten Schienen der Befestigungsvorrichtung verläuft. Das Stützelement dient hierbei der Abstützung und Fixierung des Stromkabels sowie ggf. der Schleppkette. Weiters kann das Stromkabel bspw. mithilfe eines Winkelverbinders mit der Ladestation verbunden sein.

Zusätzlich kann die Ladestation einen Anschluss für ein Datenkabel aufweisen. Das Datenkabel kann einerseits mit der Ladestation und andererseits bspw. mit einer Schnittstelle und/oder einem Bedienelement verbunden sein, über welches die Ladestation gesteuert, bspw. wahlweise eingeschaltet, wird. Das Datenkabel ist bevorzugt ebenfalls zumindest abschnittsweise in einer Schleppkette angeordnet. Besonders bevorzugt sind bei dieser Ausbildung das Stromkabel sowie das Datenkabel in einer gemeinsamen Schleppkette angeordnet. Dies erlaubt eine einfache Sicherung sowohl des Ladekabels als auch des Stromkabels.

Das Ladekabel, das der Aufladung einer Batterie eines Elektrofahrzeuges dient, kann entweder fest mit der Ladestation verbunden sein oder wahlweise mit der Ladestation verbunden werden. Bevorzugt weist das Ladesystem einen Kabelaufroller auf, um das Ladekabel im nicht genutzten Zustand sicher zu verstauen. Der Kabelaufroller kann hierbei mit der Ladestation verbunden sein oder auch in der Nähe der Ladestation, bspw. mit der Befestigungsvorrichtung, einer Wand, einer Säule oder einer Decke verbunden sein.

Bevorzugt ist vorgesehen, dass die Ladestation manuell durch einen Nutzer, also durch Körperkraft, relativ zur Befestigungsvorrichtung bewegt werden kann. Hierzu ist bevorzugt vorgesehen, dass die Ladestation zumindest einen, bevorzugt zwei Griffe aufweist. Mithilfe des bzw. der Griffe kann die Ladestation einfach ergriffen und bewegt werden, bspw. indem sie in die gewünschte Richtung gezogen bzw. gedrückt wird. Bevorzugt sind zwei einander gegenüberliegende Griffe vorgesehen, die jeweils an einer Seite der Ladestation angeordnet sind. Besonders bevorzugt sind die beiden Griffe im Wesentlichen in der gleichen Höhe angeordnet, sodass eine einfache Bewegung der Ladestation, insbesondere wenn die Ladestation im Wesentlichen in einer waagrechten Richtung bewegt werden kann, ermöglicht wird. Die Griffe sind bevorzugt relativ zur Ladestation symmetrisch angeordnet.

Alternativ oder zusätzlich kann vorgesehen sein, dass die zumindest eine Ladestation mithilfe eines Antriebsmechanismus bewegt werden kann. Der Antriebsmechanismus kann bspw. elektrisch ausgebildet sein und z.B. einen Elektromotor umfassen. Dies erlaubt es, die Ladestation durch ein Bedienen des Antriebsmechanismus zu bewegen, wodurch keine bzw. kaum manuelle Arbeit nötig ist. Der Antriebsmechanismus umfasst hierbei ein Bedienelement, bspw. einen Schalter, einen Knopf oder einen Touchscreen, das ausgebildet ist, um den Antriebsmechanismus entsprechend anzusteuern und die Ladestation in die gewünschte Position zu bringen. Das Bedienelement kann direkt an der Ladestation angeordnet sein oder alternativ räumlich getrennt von der Ladestation sein. Insbesondere kann das Bedienelement zusammen mit einer Schnittstelle für die Bezahlung des durch die Ladestation bereitgestellten Stroms ausgebildet sein. Mithilfe dieser Ausbildung gelingt es, die Ladestation einfach und effizient an den jeweils gewünschten Ort bzw. in die gewünschte Position zu bringen.

Bevorzugt ist vorgesehen, dass die Ladestation relativ zur Befestigungsvorrichtung mithilfe des Verriegelungselements stufenlos verstell- und fixierbar ausgebildet ist. Hierdurch wird die größtmögliche Flexibilität bei der Anordnung der Ladestation bereitgestellt. Insbesondere ist es möglich, die Ladestation nicht nur bspw. zwischen einer ersten Position, die einem ersten Parkplatz zugeordnet ist und einer zweiten Position, die einem zweiten Parkplatz zugeordnet ist, zu verstellen, sondern die Ladestation je nach Bedarf an der gewünschten Stelle zu positionieren, bspw. in Abhängigkeit von der Größe des Fahrzeuges, der Position des Fahrzeuganschlusses oder der genauen Lage und Position des Fahrzeuges.

Das Verriegelungselement weist bevorzugt ein Fixierelement, bspw. einen Stift, auf, das im fixierten Zustand mit dem Befestigungselement zusammenwirkt, um ein unerwünschtes Bewegen der Ladestation zu verhindern. Das Verriegelungselement kann bspw. eine Feder aufweisen, die das Fixierelement in Richtung zur verriegelten Position hin mit Kraft beaufschlagt. Hierbei befindet sich das Fixierelement immer in der verriegelten Position, außer wenn es durch einen Nutzer durch die Ausübung einer Kraft aus der verriegelten Position entfernt und in eine Bewegungsposition gebracht wird, um die Ladestation zu bewegen. Sobald die Kraftausübung durch den Nutzer beendet ist, wird das Fixierelement durch die Feder wieder in die verriegelte Position gedrückt. Dies verhindert, dass durch eine Unachtsamkeit des Nutzers die Ladestation ungewollt bewegt werden kann. Die Feder kann hierbei in jeder gewünschten Form ausgebildet sein, bspw. als Zug- oder Druckfeder, als Blattfeder, als Schraubenfeder oder als Tellerfeder.

Das Verriegelungselement weist weiters bevorzugt ein Entriegelungselement auf, welches ausgebildet ist, um das Fixierelement zwischen einer verriegelten Position und einer offenen Position zu bewegen. Bevorzugt sind zwei Entriegelungselemente angeordnet, wodurch das Fixierelement aus zwei unterschiedlichen Positionen des Nutzers gelöst werden kann. Bspw. ist ein erstes Entriegelungselement auf einer ersten Seite der Ladestation und ein zweites Entriegelungselement auf einer zweiten Seite der Ladestation angeordnet. Das Fixierelement kann hierbei von beiden Seiten gelöst werden. Das bzw. die Entriegelungselemente sind bevorzugt als Hebel ausgebildet. Der bzw. die Hebel ist derart angeordnet, dass durch eine Kraftausübung auf ein Hebelende das Fixierelement aus der verriegelten Position, ggf. gegen die Kraft einer Feder, bewegt wird, bspw. nach oben gehoben wird. Anschließend kann die Ladestation bewegt werden. Sobald die gewünschte Position erreicht ist, kann der Nutzer das Entriegelungselement loslassen und das Fixierelement wird bevorzugt mithilfe einer Feder oder der Schwerkraft wieder in die verriegelte Position geführt. Auch das Entriegelungselement wird bevorzugt wieder in die ursprüngliche Position geführt, bspw. durch die mit dem Fixierelement zusammenwirkende Feder. Um eine besonders einfache Bedienung zu ermöglichen, ist ein Teil, bspw. ein Ende, des bzw. der Entriegelungselemente im Bereich des bzw. der Griffe angeordnet, sodass der Nutzer gleichzeitig den Griff ergreifen und das Entriegelungselement bedienen kann.

Um die Montage der Ladestation an der Befestigungsvorrichtung zu erleichtern, ist bevorzugt vorgesehen, dass die Ladestation eine Adapterplatte aufweist. Die Adapterplatte ist bevorzugt plattenförmig ausgebildet und weiters bevorzugt zwischen der Ladebox und der Befestigungsvorrichtung angeordnet. Die Adapterplatte kann eine Öffnung zur Durchführung des Stromkabels zur Ladebox aufweisen. Die Adapterplatte umfasst hierbei bevorzugt die Führungsmittel sowie ggf. die Griffe und die Verriegelungsvorrichtung. Die Ladestation weist hierbei neben der eigentlichen Ladebox, die insbesondere die elektrischen Komponenten beinhaltet, eine Adapterplatte auf, die insbesondere die mechanischen Teile der Verbindung zur Befestigungsvorrichtung aufweist. Diese Ausbildung erlaubt es weiters, unterschiedliche Ladeboxen auf der Adapterplatte zu befestigen, um ein modulares System bereitzustellen. Die Ladebox und die Adapterplatte sind bevorzugt lösbar, bspw. mithilfe von Schrauben, miteinander verbunden. Falls eine Ladebox getauscht werden soll, muss diese lediglich von der Adapterplatte gelöst werden und nicht die gesamte Ladestation getauscht werden.

Um den Benutzer von beweglichen Teilen der Vorrichtung abzuschirmen, sind bevorzugt im oberen Bereich sowie besonders bevorzugt im unteren Bereich der Ladestation jeweils im Wesentlichen horizontal angeordnete Deckplatten angeordnet. Dies verhindert bzw. erschwert ein Eindringen von Gliedmaßen des Benutzers, aber auch von sonstigen Fremdkörpern in den Bereich der Verbindung zwischen der Ladestation und der Befestigungsvorrichtung. Weiters ist bevorzugt zwischen den Griffen der Ladestation und der Befestigungsvorrichtung, insbesondere den Schienen eine im Wesentlichen vertikale Schutzplatte angeordnet. Diese verhindert, dass ein Benutzer bei der Benutzung der Vorrichtung, insbesondere beim Bewegen der Ladestation, in den Bereich der Befestigungsvorrichtung auf der Hinterseite der Ladestation gelangen und zwischen bewegenden Teilen eingeklemmt werden kann. Die Schutzplatte ist bevorzugt zumindest im Bereich der Griffe angeordnet. Es können eine bzw. mehrere Schutzplatten vorgesehen sein. Beispielsweise sind zwei Schutzplatten vorgesehen, die jeweils zwischen einem Griff und der Befestigungsvorrichtung angeordnet sind.

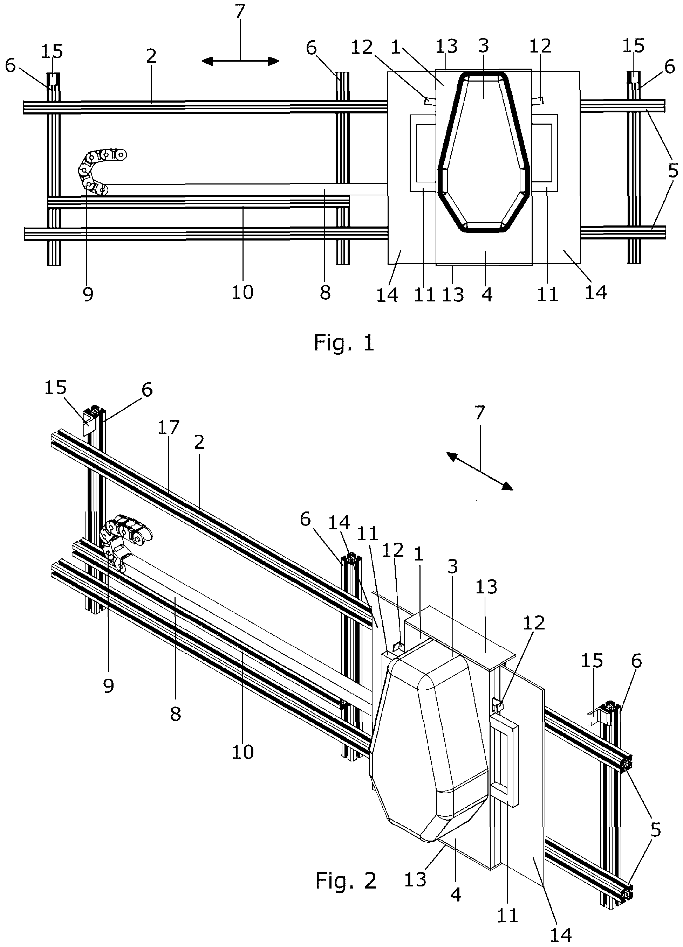

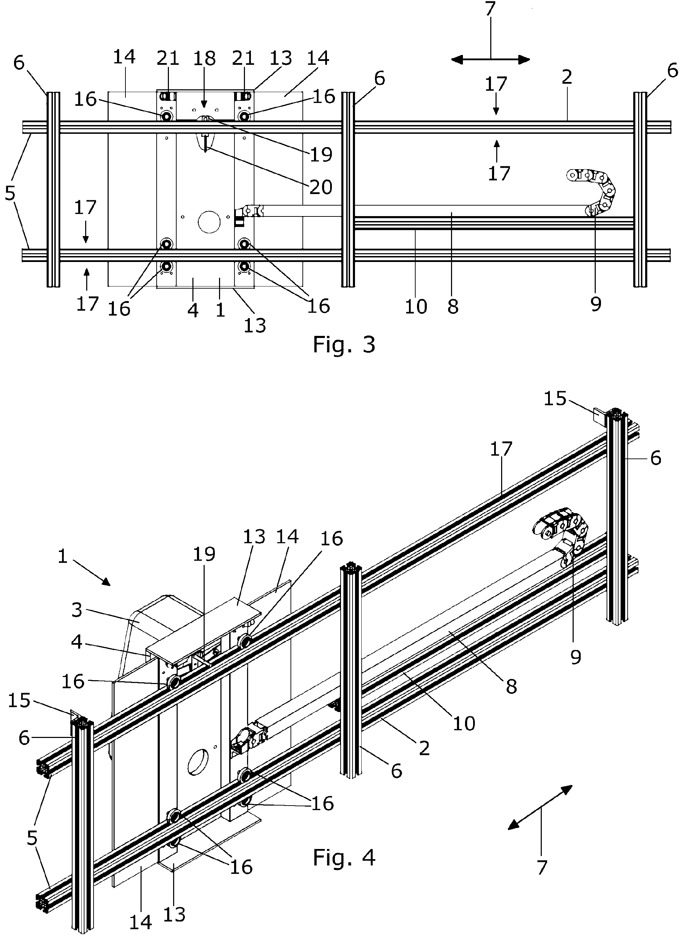

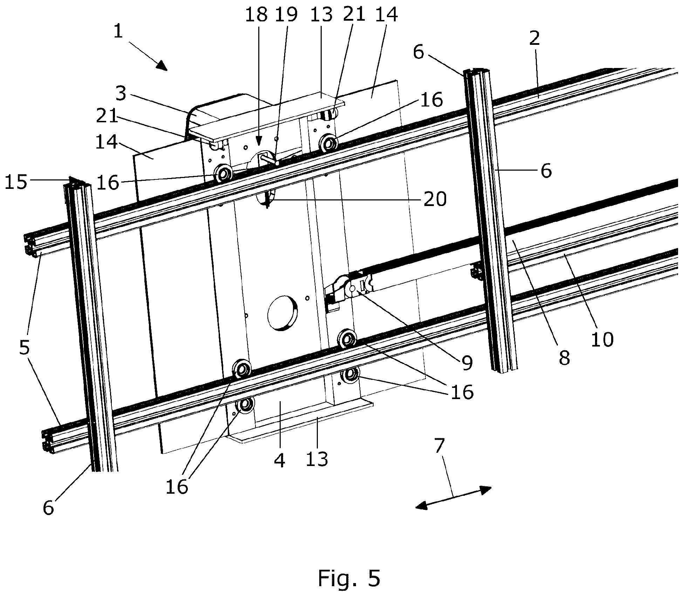

Die Bewegungsreichweite der Ladestation ist vorgegeben und wird bspw. durch die Länge der Befestigungsvorrichtung, insbesondere von Schienen bestimmt. Um die Bewegung der Ladestation relativ zur Befestigungsvorrichtung wirkungsvoll zu begrenzen, ist bevorzugt vorgesehen, dass die Ladestation ein oder mehrere Anschlagelemente aufweist, die derart angeordnet sind, dass sie am Ende der vorgegebenen Bewegungsbahn mit Begrenzungselementen kollidieren. Die Begrenzungselemente sind hierbei mit der Befestigungsvorrichtung verbunden bzw. Teil der Befestigungsvorrichtung. Die Anschlagelemente sowie die Begrenzungselemente können bspw. als Winkelverbinder ausgebildet sein und umfassen bevorzugt ein elastisches Element, insbesondere einen Gummipuffer, um eine möglichst sanfte und zerstörungsfreie Kollision zwischen dem Begrenzungselement und dem Anschlagelement zu ermöglichen. Die Erfindung wird nachfolgend anhand eines in der Zeichnung schematisch dargestellten Ausführungsbeispiels näher erläutert. In dieser zeigt Fig. 1 eine Darstellung eines erfindungsgemäßen Ladesystems in einer Ansicht von vorne, Fig. 2 eine Darstellung des Ladesystems gemäß Fig. 1 in einer perspektivischen Ansicht von vorne, Fig. 3 eine Darstellung des Ladesystems gemäß Fig. 1 in einer Ansicht von hinten, Fig. 4 eine Darstellung des Ladesystems gemäß Fig. 1 in einer perspektivischen Ansicht von hinten und Fig. 5 eine perspektivische Detailansicht des Ladesystems gemäß Fig. 1 von hinten.

In Fig. 1 wird ein erfindungsgemäßes Ladesystem, umfassend eine Ladestation 1 sowie eine Befestigungsvorrichtung 2 gezeigt. Die Ladestation 1 weist eine Ladebox 3 sowie eine Adapterplatte 4 auf. Die Befestigungsvorrichtung 2 umfasst zwei waagrecht verlaufende Schienen 5 sowie der Befestigung an einer Wand oder Säule dienende senkrecht verlaufende Schienen 6. Die beiden waagrecht verlaufenden Schienen 5 sowie die drei senkrecht verlaufenden Schienen 6 sind jeweils parallel zueinander angeordnet. Die Schienen 5 und die Schienen 6 könnten bspw. mithilfe von (nicht dargestellten) Winkelverbindern miteinander verbunden sein. Die Ladestation 1 ist mithilfe der Adapterplatte 4 mit den waagrechten Schienen 5 derart verbunden, dass die Ladestation 1 entlang der Richtung des Pfeils 7 relativ zur Befestigungsvorrichtung 2 bewegt werden kann. Die Ladestation 1 ist über ein Stromkabel 8, welches abschnittsweise in einer Schleppkette 9 angeordnet ist, mit einem nicht dargestellten Stromanschluss verbunden, um die Ladestation 1, insbesondere die Ladebox 3, mit Strom zu versorgen. Das Stromkabel 8 ist hierbei teilweise auf einer Stützschiene 10 angeordnet, die im Wesentlichen parallel zu den waagrechten Schienen 5 verläuft und der Abstützung des Stromkabels 8 sowie ggf. der Schleppkette 9 dient. Die Ladestation 1 ist ihrerseits ausgebildet, um wahlweise mit einem Elektrofahrzeug verbunden zu werden, insbesondere über ein (nicht dargestelltes) Ladekabel, um das Elektrofahrzeug mit Strom zu versorgen. Die Adapterplatte 4 der Ladestation 1 weist beidseitig im Wesentlichen symmetrisch angeordnete Griffe 11 auf, die dazu dienen, um die Ladestation 1 manuell entlang des Pfeils 7 zu bewegen. Weiters sind zwei Entriegelungselemente 12 in Form von Hebeln dargestellt, die im Bereich der Griffe 11 angeordnet sind. Um den Benutzer von beweglichen Teilen abzuschirmen, sind im oberen Bereich sowie im unteren Bereich der Ladestation 1 jeweils im Wesentlichen horizontal angeordnete Deckplatten 13 sowie zwischen den Griffen 11 und den Schienen 5,6 im Wesentlichen vertikale Schutzplatten 14 angeordnet. Diese verhindern, dass ein Benutzer bei der Benutzung der Vorrichtung in den Bereich der Schienen 5 auf der Hinterseite der Ladestation 1 gelangen und zwischen bewegenden Teilen eingeklemmt werden kann. Um die Bewegung der Ladestation 1 relativ zur Befestigungsvorrichtung 2 zu begrenzen, weisen die beiden äußersten vertikalen Schienen 6 jeweils ein als Winkel ausgebildetes Begrenzungselement 15 auf, die bei Bedarf mit einem entsprechenden Anschlagelement 21 (Fig. 3) zusammenwirken, um eine unerwünschte Bewegung der Ladestation 1 relativ zur Befestigungsvorrichtung 2, insbesondere ein Herausfallen aus den Schienen 5, zu verhindern.

In Fig. 2 ist eine Darstellung des Ladesystems gemäß Fig. 1 in einer perspektivischen Ansicht von vorne gezeigt.

In Fig. 3 ist eine Darstellung des Ladesystems gemäß Fig. 1 in einer Ansicht von hinten gezeigt. Es ist zu erkennen, dass die Adapterplatte 4 Führungselemente 16 in Form von Rädern aufweist. Die Führungselemente 16 sind in Nuten 17 der Schienen 5 angeordnet und bewegen sich bei der Bewegung der Ladestation 1 innerhalb dieser Nuten 17.

Weiters ist das Verriegelungselement 18 dargestellt. Die Führungselemente 16 sind im Bereich der unteren Schiene 5 beidseitig der Schiene 5 angeordnet und in zwei einander gegenüberliegenden Nuten 17 der Schiene 5 geführt. Im Bereich der oberen Schiene 5 sind die Führungselemente 16 lediglich einseitig der Schiene 5 angeordnet und in der entsprechenden Nut 17 der Schiene 5 geführt. Das Verriegelungselement 18 umfasst neben den beiden Entriegelungselementen 12 ein Fixierelement 19 in Form eines Stiftes sowie eine Feder 20. Die Feder 20 zieht in der dargestellten verriegelten Position das Fixierelement 19 zur oberen der Schienen 5 hin, sodass ein Verschieben der Ladestation 1 entlang der Schienen 5 nicht möglich ist. Die Entriegelungselemente 12 verlaufen jeweils in den Bereich des Fixierelements 19. Um das Verriegelungselement 18 in die offene Position zu bringen, kann eines (oder beide) der Entriegelungselemente 12 am dem Fixierelement 19 abgewandten Ende nach unten, also in Richtung zum Griff 11, gedrückt werden. Hierdurch wird das Fixierelement 19 gegen die Kraft der Feder 20 nach oben von der Schiene 5 weg gedrückt und die Bewegung der Ladestation 1 entlang den Schienen 5 ermöglicht. Nachdem die Ladestation 1 in der gewünschten Position angekommen ist, indem sie manuell mithilfe der Griffe 11 bewegt wurde, kann der Nutzer die Kraftausübung auf das bzw. die Entriegelungselemente 12 beenden und das Fixierelement 19 wird durch die Kraft der Feder 20 wieder in Richtung zur Schiene 5 in die verriegelte Position gedrückt, sodass die Bewegung der Ladestation 1 relativ zur Befestigungsvorrichtung 2 wieder blockiert wird. Während der Bewegung wird das Stromkabel 8 sowie die Schleppkette 9 je nach Position verlagert und bspw. aus bzw. in einen Speicher auf- oder abgerollt. In der neuen Position der Ladestation 1 kann nunmehr bspw. ein Ladevorgang eines Elektrofahrzeuges durchgeführt werden. Weiters sind die Anschlagelemente 21 dargestellt, die ausgebildet sind, um mit den Begrenzungselementen 15 zur Begrenzung der Bewegung der Ladestation 1 ggf. zusammenzuwirken.

In Fig. 4 ist eine Darstellung des Ladesystems gemäß Fig. 1 in einer perspektivischen Ansicht von hinten gezeigt.

In Fig. 5 ist eine perspektivische Detailansicht des Ladesystems gemäß Fig. 1 von hinten gezeigt. Die oben beschriebenen Elemente des Ladesystems sind noch deutlicher dargestellt.

## Patentansprüche

1. Ladesystem, umfassend zumindest eine Ladestation (1) sowie eine Befestigungsvorrichtung (2), die mit der zumindest einen Ladestation (1) verbunden ist, wobei die Ladestation (1) mithilfe eines Stromkabels (8) mit einer Stromquelle verbindbar ist, **dadurch gekennzeichnet, dass** die zumindest eine Ladestation (1) relativ zur Befestigungsvorrichtung (2) wahlweise bewegbar angeordnet ist.

2. Ladesystem nach Anspruch 1, **dadurch gekennzeichnet, dass** die Ladestation (1) relativ zur Befestigungsvorrichtung (2) translatorisch verschiebbar angeordnet ist.

3. Ladesystem nach Anspruch 1 oder 2, **dadurch gekennzeichnet, dass** die Befestigungsvorrichtung (2) zumindest eine Schiene (5,6) umfasst.

4. Ladesystem nach Anspruch 1, 2 oder 3, **dadurch gekennzeichnet, dass** das Stromkabel (8) zumindest abschnittsweise in einer Schleppkette (9) angeordnet ist.

5. Ladesystem nach einem der Ansprüche 1 bis 4, **dadurch gekennzeichnet, dass** die Ladestation (1) zumindest einen, bevorzugt zwei Griffe (11) aufweist.

6. Ladesystem nach einem der Ansprüche 1 bis 5, **dadurch gekennzeichnet, dass** die zumindest eine Ladestation (1) relativ zur Befestigungsvorrichtung (2) wahlweise mithilfe eines Verriegelungselements (18) fixiert werden kann.

7. Ladesystem nach Anspruch 6, **dadurch gekennzeichnet, dass** die Ladestation (1) relativ zur Befestigungsvorrichtung (2) mithilfe des Verriegelungselements (18) stufenlos fixierbar ausgebildet ist.

8. Ladesystem nach einem der Ansprüche 1 bis 7, **dadurch gekennzeichnet, dass** die Ladestation (1) eine Adapterplatte (4) aufweist.
